# EUROPÄISCHE PATENTSCHRIFT

(11) **EP 3 006 236 B1**
(45) Veröffentlichungstag und Bekanntmachung des Hinweises auf die Patenterteilung: **14.02.2018**
(21) Anmeldenummer: 14188471.8
(22) Anmeldetag: 10.10.2014
(51) Int. Cl.: B60D 5/00, B61D 17/22, B62D 47/02

(54) **Materialbahn sowohl eines Balges eines Übergangs zwischen zwei gelenkig miteinander verbundenen Fahrzeugen als auch die Materialbahn des Vordachs einer Fluggasttreppe oder -brücke**
Material web of both a bellows of a passage between two vehicles with a jointed connection and the material of the apron of an air passenger boarding bridge or steps
Bande de matériau tant d'une poutre d'un passage entre deux véhicules reliés de manière articulée entre eux que la bande de matériau de l'avant-toit d'une passerelle ou d'un escalier d'embarquement

(43) Veröffentlichungstag der Anmeldung: 13.04.2016
(60) Teilanmeldung: 16157808.3
(73) Patentinhaber: Hübner GmbH & Co. KG, 34123 Kassel (DE)
(72) Erfinder: Wiegrefe, Andreas, 36039 Fulda/Bernhards (DE); Busch, Thomas, 34359 Reinhardshagen (DE)
(74) Vertreter: Patentanwälte Walther Hinz Bayer PartGmbB

(56) Entgegenhaltungen:
- EP-A2- 1 182 110
- DE-A1-102004 043 193
- DE-A1-102006 058 470
- DE-T2- 69 525 744
- FR-A1- 2 333 657
- JP-A- 2009 107 507

## Beschreibung

Die Erfindung betrifft sowohl eine Materialbahn eines Balges eines Übergangs zwischen zwei gelenkig miteinander verbundenen Fahrzeugen, als auch die Materialbahn eines Vordaches einer Fluggasttreppe oder Fluggastbrücke gemäß dem Oberbegriff des Anspruches 1.

Bälge der eingangs genannten Art bestehen üblicherweise aus mindestens einer Festigkeitsträgerschicht, meistens einem Gewebe, wobei das Gewebe als Festigkeitsträgerschicht zu beiden Seiten von einem Elastomer umgeben ist. Aus derartigen Materialbahnen werden Falten- oder auch Wellenbälge hergestellt. Bekannt sind in diesem Zusammenhang auch sogenannte Doppelwellenbälge, d. h. Bälge, die ineinander gelagert die Balgeinrichtung eines Überganges bilden. Derartige Doppelwellenbälge werden insbesondere bei schnell fahrenden Zügen eingesetzt, und sorgen u.a. für eine erhöhte Geräuschdämmung. Insbesondere wird durch den Einsatz solcher Doppelwellenbälge bei schnell fahrenden Zügen vermieden, dass sich Druckstöße, wie sie entstehen, wenn ein solcher schnell fahrender Zug in einen Tunnel einfährt, oder sich zwei schnell fahrende Züge begegnen, in das Fahrzeuginnere fortsetzen; zumindest wird die Heftigkeit der Druckstöße vermindert.

Das Problem der Geräuschdämmung ist allerdings nicht nur in schnell fahrenden Zügen virulent, sondern generell in sämtlichen öffentlichen Verkehrsmitteln, seien es Straßenbahnen oder auch Gelenkbusse. Allerdings wird man in Straßenbahnen und Bussen allein aus Kostengründen vom Einbau von solchen Doppelwellen- oder Doppelfaltenbälge absehen. Das heißt, es besteht durchaus ein Interesse daran, das Problem der Geräuschdämmung auf einfachere und vor allem kostengünstigere Art und Weise zu lösen.

Aus der DE 695 25 774 T2 ist ein Aufbau für eine Materialbahn für einen Faltenbalg bekannt, wobei die Materialbahn einen Festigkeitsträger aus einer Glasfasergewebe-Matrix aufweist. An beiden Seiten ist die Glasfasergewebe-Matrix mit einer PTFE-Beschichtung versehen; auf einer der beiden Beschichtungen befindet sich ein silikonartiger druckempfindlicher Klebstoff. Die Klebstoffschicht dient dazu, die PTFE-Beschichtung wasserdicht zu gestalten.

Die JP 2009 107 507 A beschreibt eine Plane mit einem Gewebe, das mit einem Elastomer beschichtet ist. Zwischen Gewebe und Elastomer befindet sich eine Klebstoffschicht. Einen ähnlichen Aufbau zeigt die DE 10 2006 058 470 A1.

Die EP 1 182 110 A2 hat zum Gegenstand den Aufbau einer Materialbahn mit einem elastischen Träger, auf dem durch eine Klebstoffschicht ein gewirkter Festigkeitsträger angeordnet ist.

Aus der DE 69 525 744 T2 ist eine Materialbahn gemäß dem Oberbegriff des Anspruchs 1 bekannt. Im Einzelnen ist hieraus bekannt, eine Glasfasergewebe-Matrix durch eine silikonhaltige Klebstoffschicht mit einer PTFE-Beschichtung zu versehen.

Die der Erfindung zugrunde liegende Aufgabe besteht darin, eine Materialbahn der eingangs genannten Art bereitzustellen, die gute akustische Dämmwerte aufweist, und die dennoch preiswert in der Herstellung ist, so dass sie auch bei kostengünstigen Ausgestaltungen eines Balges, z. B. in der Straßenbahn oder einem Gelenkbus einsetzbar ist.

Es wurde nun überraschenderweise herausgefunden, dass dann, wenn als Festigkeitsträgerschicht ein Vlies verwendet wird, das beidseitig mit einer Elastomerbeschichtung versehen ist, und wobei mindestens eine äußere Elastomerbeschichtung der Materialbahn eine Perforation, insbesondere eine Mikroperforation, mit einzelnen Kanälen aufweist, wobei zwischen Elastomerbeschichtung und dem Vlies eine Haftvermittlerschicht vorgesehen ist, eine solche Materialbahn nicht nur geräuschabsorbierend ist, sondern schlussendlich auch geräuschdämmend.

Vorteilhaft ist, wenn auf der Seite der Geräuschbildung die Perforation vorgesehen ist, d. h. Geräusche durch die Öffnungen der Perforation und hier insbesondere der Mikroperforation bis in das Vlies gelangen, und dort absorbiert werden. Unter einer Mikroperforation wird eine Perforation verstanden bei der die Öffnungen im Mikrometerbereich liegen.

Für die nachfolgenden Ausführungen umfasst ein Vlies definitionsgemäß mindestens eine, vorzugsweise mehrere miteinander vernadelte Gelegeschichten aus Fäden, wobei mehrere Gelegeschichten miteinander ebenfalls vernadelt sein können. Jede Gelegeschicht oder eine Gelegelage weist eine Vielzahl von Fäden auf, die mono- oder auch bidirektional verlaufen können. Die geräuschabsorbierende und geräuschdämmende Wirkung ergibt sich aus Folgendem: Das Vlies selber absorbiert als Gelege auftretende Geräusche. Die Beschichtung aus einem Kunststoff, beispielsweise EPDM oder Silikon, ist verhältnismäßig massereich, und daher geräuschdämmend. In Kombination ergibt sich somit eine Materialbahn, die gute akustische Dämmwerte verwirklicht, die im Ähnlichkeitsbereich von Dämmwerten liegen, die mit einem Doppelwellenbalg oder Doppelfaltenbalg verwirklicht werden können, wenn dort als Festigkeitsträger ein Gewebe verwendet wird. Relevant für die Erzielung guter akustischer Dämmwerte ist die Verwendung einer Haftvermittlerschicht zwischen dem Vlies einerseits und der Beschichtung aus einem Elastomermaterial andererseits. Grundsätzlich gilt, dass ein Vlies sehr durchlässig ist. Wird mithilfe eines Kalanders die Elastomerbeschichtung auf das Vlies aufgebracht, besteht grundsätzlich immer die Gefahr, dass in Abhängigkeit von der Höhe des Vlieses und dessen Dichte das Elastomermaterial die Vliesschicht vollständig durchdringt. Es wurde nun überraschenderweise herausgefunden, dass durch die Verwendung einer Haftvermittlerschicht zwischen Vlies einerseits und Elastomerbeschichtung andererseits verhindert wird, dass die Elastomerbeschichtung vor und auch während der Vulkanisation tief in das Vlies eindringen kann. Primär ist durch die Haftvermittlerschicht sichergestellt, dass die Elastomerbeschichtung auf der Oberfläche des Vlieses verbleibt, dort allerdings gleichwohl eine stabile Verbindung mit dem Vlies bewirkt wird. Würde die Elastomerschicht das Vlies vollständig durchdringen, dann würde die geräuschabsorbierende Wirkung des Vlieses gegen Null streben, was wiederum schlechte Dämmwerte in Bezug auf die Akustik zur Folge hätte.

Vorteilhafte Merkmale und Ausgestaltungen der Erfindung ergeben sich aus den Unteransprüchen.

Das Vlies, das als Vliesstoff, Vliesline, Vliesgelege oder Vliesgewirk ausgebildet sein kann, umfasst vorteilhaft mehrere Gelegeschichten. Diese mehreren Schichten können, wie bereits ausgeführt, als einzelne Gelegeschichten aus Fäden miteinander vernadelt werden, um eine stabile Verbindung zwischen den Schichten zu bewerkstelligen.

Die Schichten sind im Einzelnen derart ausgebildet und/oder miteinander verbunden, dass das Vlies als Ganzes in unterschiedliche Richtungen unterschiedliche Zugkräfte aufnehmen kann. Dies ist relevant vor dem Hintergrund, dass häufig in Längsrichtung des Fahrzeugs, insbesondere bei Kurvenfahrt eine höhere Dehnung insbesondere im Seitenwandbereich bewerkstelligt werden muss, als beispielsweise im Dach- oder gar im Bodenbereich. Das heißt, die einzelnen Schichten oder Gelege weisen monodirektional ausgerichtete Fäden auf, wobei einzelne Gelegeschichten aus monodirektional ausgebildeten Fäden derart aufeinander aufliegen, dass die Fäden der einzelnen Schichten winklig zueinander liegen. Das hat beispielsweise zur Folge, dass wenn zwei Gelegeschichten von Fäden im Winkel von 90° zueinander liegen, in Richtung eines Winkels von 45° ein solches Vlies eine verhältnismäßig hohe Dehnfähigkeit bereitstellt, nicht allerdings im Winkelbereich von 0° und 90°. Hieraus folgt unmittelbar, dass der Einsatzbereich eines solchen Vlieses an die äußeren Bedingungen relativ einfach anpassbar ist. In diesem Zusammenhang ist ebenfalls denkbar in den einzelnen Gelegeschichten Fäden unterschiedlicher Kunststoffmaterialien einzusetzen. Hierbei ist vorstellbar, z. B. aus Kostengründen, zwischen zwei Gelegeschichten als Deckschichten aus Aramid eine Zwischenschicht als Gelege aus Polyester anzuordnen. Ein solchermaßen aufgebautes Vlies hätte aufgrund der Aramiddeckschichten gute flammhemmende Eigenschaften.

Vorteilhaft können auch innerhalb der Gelegeschichten Fäden unterschiedlicher Materialien, insbesondere von Kunststoffen eingesetzt werden, um hierdurch schlussendlich das gesamte Vlies an unterschiedliche Einsatzzwecke anzupassen.

Nach einem vorteilhaften Merkmal der Erfindung weist das Vlies mindestens eine Gelegeschicht auf, in der elastische Fäden angeordnet sind. Solche elastische Fäden können beispielsweise aus Silikon oder auch aus EPDM ausgebildet sein. Vorteilhaft an einem solchermaßen aufgebauten Vlies ist, dass eine hohe Elastizität in einer Richtung erreicht wird, wohingegen in der anderen Richtung, in der die nicht dehnbaren Fäden eines solchen Vlieses mit mehreren Gelegeschichten verlaufen, im Wesentlichen keine oder nur eine sehr geringe Dehnfähigkeit vorhanden ist. Solche Vliese mit Gelegen oder Gelegeschichten aus Fäden elastischer bzw. auch nicht elastischer Art können insbesondere auch dort zum Einsatz gelangen, wo mit hohen Vandalismusschäden zu rechnen ist. Insbesondere dann, wenn die elastischen Fäden quer zu einer gedachten Schnittrichtung verlaufen, was im Wesentlichen immer der Fall sein wird, wenn solche Fäden beispielsweise in der Seitenwand parallel zur Längsachse des Fahrzeugs verlaufen, wird erreicht werden, dass der Balg nur in den seltensten Fällen über die gesamte Höhe der Seitenwand aufgeschlitzt werden kann. Dies deshalb, weil die elastischen Fäden sich aufgrund ihrer Elastizität in Abhängigkeit von der Länge des Schnittes baumartig in Richtung des Schnittes aufbauen werden, und insofern dafür gesorgt wird, dass der Schnitt ohne unverhältnismäßig hohen Kraftaufwand nicht weiter geführt werden kann.

Nach einem weiteren Merkmal der Erfindung ist vorgesehen, dass die Fäden des Vlieses eine unterschiedliche Dicke aufweisen. Die Stärke oder Dicke der Fäden ist wiederum abhängig von der Beanspruchungsrichtung der Materialbahn. Im Einzelnen kann in diesem Fall vorgesehen sein, dass die Fäden einzelner Schichten oder Gelege des Vlieses eine unterschiedliche Dicke aufweisen, wobei vorteilhaft mindestens eine Schicht mit Fäden größerer Dicke zwischen mindestens zwei Schichten mit Fäden geringerer Dicke eingebettet ist. Der Grund hierfür ist darin zu finden, dass ein Gelege eines Vlieses mit Fäden größerer Dicke oder Stärke eher von dem Elastomer durchdrungen wird, als eine Schicht mit dünneren Fäden, wenn man davon ausgeht, dass der Abstand zwischen den Fäden gleich sein soll.

Anhand der Zeichnungen wird die Erfindung beispielhaft näher erläutert.
- Fig. 1: zeigt schematisch ein Gelenkfahrzeug mit einem Balg als Teil des Übergangs zwischen den beiden Fahrzeugteilen;
- Fig. 2: zeigt schematisch übereinander angeordnet drei Gelegeschichten zur Bildung eines Vlieses;
- Fig. 3: zeigt schematisch im Schnitt ein zu beiden Seiten mit einem Elastomer beschichtetes Vlies;
- Fig. 4: zeigt eine Darstellung eines von beiden Seiten mit einem Elastomer beschichteten Vlieses, wobei jedoch die

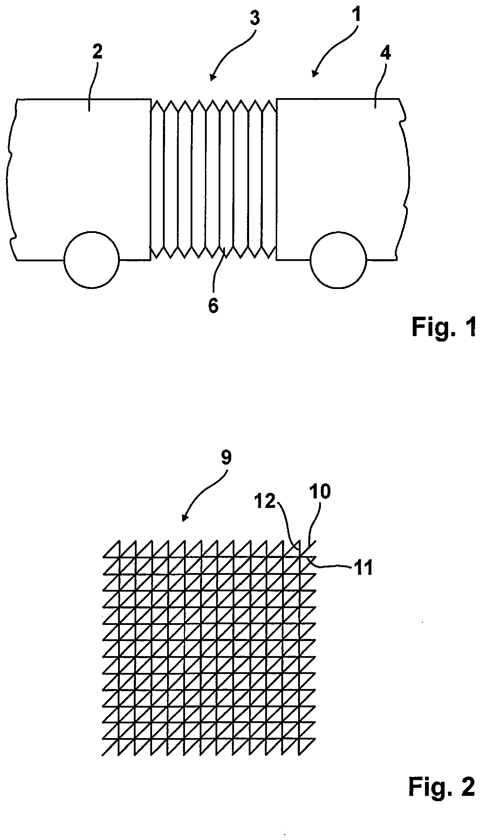

Gemäß Fig. 1 zeigt das mit 1 bezeichnete Gelenkfahrzeug den insgesamt mit 3 bezeichneten Übergang zwischen den beiden Fahrzeugteilen 2 und 4, wobei der Übergang den insgesamt mit 6 bezeichneten Balg umfasst. Der Balg 6 ist als Falten- oder Wellenbalg ausgebildet, und besitzt mehrere durch Nähen miteinander verbundene Falten- oder Wellenbahnen als Materialbahnen, die zudem durch umlaufende Balgrahmen gehalten sind.

Gegenstand der Erfindung ist nun die Materialbahn zur Bildung des Falten- oder Wellenbalges als Teil eines Überganges zwischen zwei gelenkig miteinander verbundenen Fahrzeugen, um mithilfe des Balges Personen das Hinüberwechseln von einem Fahrzeugteil zum anderen Fahrzeugteil, ohne dass diese Witterungseinflüssen ausgesetzt sind, zu ermöglichen.

Fig. 2 weist in diesem Zusammenhang drei das Vlies 9 bildende Fadengelege 10, 11 und 12 auf, die im Winkel von 90° bzw. 45° zueinander liegen. Das heißt, dass die Fäden der Gelegeschicht 11 zu der Gelegeschicht 12 im Winkel von 90° liegen, währenddessen die Gelegeschicht 10 zu den Gelegeschichten 11 und 12 im Winkel von jeweils 45° liegt. Die einsetzbaren Gelegeschichten bilden das Vlies; zusammen mit der Elastomerbeschichtung auf jeder Seite bildet das Vlies die Materialbahn.

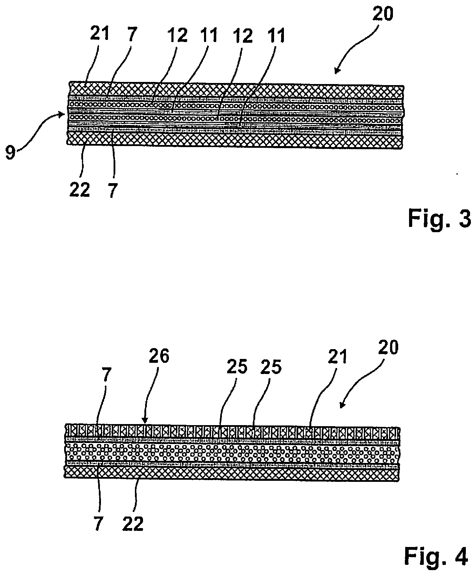

Das Vlies 9 selbst weist gemäß Fig. 3 vier Gelegeschichten oder Gelegelagen auf, wobei die Fäden der einzelnen Gelegeschichten 11 und 12 winklig zueinander angeordnet sind, insbesondere im Winkel von 90°. Der als Vlies 9 ausgebildete Festigkeitsträger, umfassend die mehreren Gelegeschichten 11 und 12, weist zu beiden Seiten zur Bildung der Materialbahn 20 die Elastomerbeschichtung 21, 22 auf, wobei durchaus denkbar ist, die beiden Elastomerbeschichtungen aus unterschiedlichen Elastomermaterialien auszubilden. Vorgesehen kann hierbei beispielsweise sein, die eine äußere Schicht aus Silikon hingegen die andere äußere Schicht aus einem EPDM auszubilden. Zwischen der jeweiligen Elastomerschicht einerseits und dem Vlies andererseits ist eine Haftvermittlerschicht 7 vorgesehen, die neben einer stoffschlüssigen Verbindung zwischen der Elastomerbeschichtung und dem Vlies auch dafür sorgt, dass während des Kalandriens, also während des Beschichtungsvorgangs, die Elastomerbeschichtung im nicht vulkanisierten Zustand das Vlies vollständig durchdringt. Das heißt, die Haftvermittlerschicht fungiert als Sperre für die Elastomerbeschichtung. Die Haftvermittlerschicht kann hierbei in Abhängigkeit von dem Beschichtungsmaterial als polyolefiner Haftvermittler oder Silonhaftvermittler ausgebildet sein.

Aus Fig. 4 ergibt sich die sogenannte Mikroperforation 26 der einen Elastomerbeschichtung. Die Mikroperforation umfasst mehrere Kanäle 25, die von der Außenseite der Elastomerbeschichtung 21 bis in den als Vlies ausgebildeten Festigkeitsträger hineinragen. Diese Perforation, insbesondere die Mikroperforation ist auf der Seite der Materialbahn vorgesehen, auf der sich die Geräuschquelle befindet, also insbesondere auf der Außenseite eines Balges.

### Bezugszeichenliste:

- 1: Gelenkfahrzeug
- 2: Fahrzeugteil
- 3: Übergang
- 4: Fahrzeugteil
- 6: Balg
- 7: Haftvermittlerschicht
- 9: Vlies
- 10, 11, 12: Gelegeschicht
- 20: Materialbahn
- 21, 22: Elastomerbeschichtung
- 25: Kanal
- 26: Perforation

## Patentansprüche

1. Materialbahn (20) eines Balges (6) eines Überganges (3) zwischen zwei gelenkig miteinander verbundenen Fahrzeugen oder Materialbahn des Vordachs einer Fluggastbrücke oder Fluggasttreppe, wobei die Materialbahn (20) mindestens eine Festigkeitsträgerschicht aufweist, die beidseitig eine Elastomerbeschichtung (21, 22) aufweist, wobei die mindestens eine Festigkeitsträgerschicht aus einem Vlies (9) ausgebildet ist, wobei zwischen dem Vlies (9) und der Elastomerbeschichtung (21, 22) eine Haftvermittlerschicht (7) angeordnet ist.
**dadurch gekennzeichnet,**
**dass** mindestens eine äußere Elastomerbeschichtung (21, 22) der Materialbahn (20) eine Perforation (26) aufweist.

2. Materialbahn (20) nach Anspruch 1,
**dadurch gekennzeichnet,**
**dass** das Vlies (9) als Vliesstoff, Vliesline, Vliesgewirk oder Vliesgelege ausgebildet ist.

3. Materialbahn (20) nach einem der voranstehenden Ansprüche,
**dadurch gekennzeichnet,**
**dass** das Vlies (9) mehrere Gelegeschichten (10, 11, 12) aufweist.

4. Materialbahn (20) nach Anspruch 3,
**dadurch gekennzeichnet,**
**dass** die Gelegeschichten (10, 11, 12) derart ausgebildet sind, dass das Vlies (9) in unterschiedlichen Richtungen unterschiedliche Zugkräfte aufnehmen kann.

5. Materialbahn (20) nach einem der Ansprüche 3 oder 4,
**dadurch gekennzeichnet,**
**dass** die einzelnen Gelegeschichten (10, 11, 12) monodirektional ausgerichtete Fäden aufweisen.

6. Materialbahn (20) nach Anspruch 5,
**dadurch gekennzeichnet,**
**dass** die einzelnen Gelegeschichten (10, 11, 12) aus monodirektional ausgerichteten Fäden derart aufeinander liegen, dass die Fäden der einzelnen Gelegeschichten (10, 11, 12) winklig zueinander liegen.

7. Materialbahn (20) nach einem der voranstehenden Ansprüche,
**dadurch gekennzeichnet,**
**dass** die mindestens eine Schicht eines Vlieses (9) elastische Fäden aufweist.

8. Materialbahn (20) nach einem der voranstehenden Ansprüche,
**dadurch gekennzeichnet,**
**dass** die Fäden des Vlieses (9) eine unterschiedliche Dicke aufweisen.

9. Materialbahn (20) nach einem der Ansprüche 3 bis 8,
**dadurch gekennzeichnet,**
**dass** die Fäden einzelner Gelegeschichten (10, 11, 12) des Vlieses (9) eine unterschiedliche Dicke aufweisen.

10. Materialbahn (20) nach Anspruch 9,
**dadurch gekennzeichnet,**
**dass** die mindestens eine Gelegeschicht (10, 11, 12) mit Fäden größerer Dicke zwischen mindestens zwei Gelegeschichten (10, 11, 12) von Fäden geringerer Dicke eingebettet ist.

11. Materialbahn (20) nach einem der voranstehenden Ansprüche,
**dadurch gekennzeichnet,**
**dass** die Perforation (26) als Mikroperforation ausgebildet ist.

12. Materialbahn (20) nach einem der Ansprüche 3 bis 11,
**dadurch gekennzeichnet,**
**dass** die Gelegeschichten (10, 11, 12) Fäden unterschiedlicher Materialien aufweisen.

13. Materialbahn (20) nach einem der Ansprüche 3 bis 11,
**dadurch gekennzeichnet,**
**dass** die Fäden einer Gelegeschicht (10, 11, 12) aus unterschiedlichen Materialien ausgebildet sind.

14. Materialbahn (20) nach Anspruch 3,
**dadurch gekennzeichnet,**
**dass** die Gelegeschichten (10, 11, 12) derart miteinander verbunden sind, dass das Vlies (9) in unterschiedlichen Richtungen unterschiedliche Zugkräfte aufnehmen kann.

## Claims

1. A material web (20) of a bellows (6) of a gangway (3) between two articulately connected vehicles or a material web of a canopy roof of a passenger boarding bridge or passenger boarding stairs, wherein the material web (20) has at least one reinforcement layer having an elastomer coating (21, 22) on both sides, wherein the at least one reinforcement layer is formed by a nonwoven (9), wherein an adhesion-promoting layer (7) is disposed between the nonwoven (9) and the elastomer coating (21, 22),
**characterized in that**
at least one outer elastomer coating (21, 22) of the material web (20) comprises a perforation (26).

2. The material web (20) according to claim 1,
**characterized in that**
the nonwoven (9) is designed as a nonwoven fabric, a vlieseline, a nonwoven knitted fabric or a nonwoven non-crimp fabric.

3. The material web (20) according to one of the afore-mentioned claims,
**characterized in that**
the nonwoven (9) has several non-crimp fabric layers (10, 11, 12).

4. The material web (20) according to claim 3,
**characterized in that**
the non-crimp fabric layers (10, 11, 12) are formed in such a manner that the nonwoven (9) can absorb different tensile forces from different directions.

5. The material web (20) according to one of the claims 3 or 4,
**characterized in that**
the individual non-crimp fabric layers (10, 11, 12) have mono-directionally oriented yarns.

6. The material web (20) according to claim 5,
**characterized in that**
the individual non-crimp fabric layers (10, 11, 12) of mono-directionally oriented yarns rest on one another in such a manner that the yarns of the individual non-crimp layers (10, 11, 12) rest at an angle relative to each other.

7. The material web (20) according to one of the afore-mentioned claims,
**characterized in that**
the at least one layer of a nonwoven (9) has elastic yarns.

8. The material web (20) according to one of the afore-mentioned claims,
**characterized in that**
the yarns of the nonwoven (9) have different thicknesses.

9. The material web (20) according to one of the claims 3 to 8,
**characterized in that**
the yarns of individual non-crimp fabric layers (10, 11, 12) of the nonwoven (9) have different thicknesses.

10. The material web (20) according to claim 9,
**characterized in that**
the at least one non-crimp fabric layer (10, 11, 12) with yarns of greater thickness is embedded between at least two non-crimp fabric layers (10, 11, 12) of yarns of lesser thickness.

11. The material web (20) according to one of the afore-mentioned claims,
**characterized in that**
the perforation (26) is formed as a micro-perforation.

12. The material web (20) according to one of the claims 3 to 11,
**characterized in that**
the non-crimp fabric layers (10, 11, 12) have yarns made of different materials.

13. The material web (20) according to one of the claims 3 to 11,
**characterized in that**
the yarns of a non-crimp fabric layer (10, 11, 12) are made of different materials.

14. The material web (20) according to claim 3,
**characterized in that**
the non-crimp fabric layers (10, 11, 12) are joined in such a manner that the nonwoven (9) can absorb different tensile forces from different directions.

## Revendications

1. Bande de matériau (20) d'un soufflet (6) d'une passerelle
d'intercirculation (3) entre deux voitures reliées de manière articulée ou bande de matériau d'un auvent d'une passerelle d'embarquement ou d'un escalier d'embarquement, la bande de matériau (20) comprenant au moins une couche de renfort qui comprend un revêtement élastomère (21, 22) des deux côtés, l'au moins une couche de renfort étant formée par un non-tissé (9), une couche de promoteur d'adhérence (7) étant disposée entre le non-tissé (9) et le revêtement élastomère (21,22),
**caractérisée en ce que**
au moins un revêtement élastomère extérieur (21, 22) de la bande de matériau (20) présente une perforation (26).

2. Bande de matériau (20) selon la revendication 1,
**caractérisée en ce que**
le non-tissé (9) prend la forme d'un textile non-tissé, d'un Vlieseline, d'un tricot non-tissé ou d'un non-tissé NCF.

3. Bande de matériau (20) selon l'une des revendications précédentes,
**caractérisée en ce que**
le non-tissé (9) comprend plusieurs couches de NCF (10, 11, 12).

4. Bande de matériau (20) selon la revendication 3,
**caractérisée en ce que**
les couches de NCF (10, 11, 12) sont formées de telle manière que le non-tissé (9) peut absorber différentes forces de traction dans différentes directions.

5. Bande de matériau (20) selon l'une des revendications 3 ou 4,
**caractérisée en ce que**
les différentes couches de NCF (10, 11, 12) ont des fils unidirectionnels.

6. Bande de matériau (20) selon la revendication 5,
**caractérisée en ce que**
les différentes couches de NCF (10, 11, 12) de fils unidirectionnels reposent les unes sur les autres de telle manière que les fils des différentes couches de NCF (10 11, 12) forment un angle les uns par rapport aux autres.

7. Bande de matériau (20) selon l'une des revendications précédentes,
**caractérisée en ce que**
l'au moins une couche d'un non-tissé (9) comporte des fils élastiques.

8. Bande de matériau (20) selon l'une des revendications précédentes,
**caractérisée en ce que**
les fils du non-tissé (9) ont des épaisseurs différentes.

9. Bande de matériau (20) selon l'une des revendications 3 à 8,
**caractérisée en ce que**
les fils de différentes couches de NCF (10, 11, 12) du non-tissé (9) ont des épaisseurs différentes.

10. Bande de matériau (20) selon la revendication 9,
**caractérisée en ce que**
l'au moins une couche de NCF (10, 11, 12) avec des fils de plus grande épaisseur est incorporée entre au moins deux couches de NCF (10, 11, 12) de fils de plus petite épaisseur.

11. Bande de matériau (20) selon l'une des revendications précédentes,
**caractérisée en ce que**
la perforation (26) prend la forme d'une micro-perforation.

12. Bande de matériau (20) selon l'une des revendications 3 à 11,
**caractérisée en ce que**
les couches de NCF (10, 11, 12) comprennent des fils de matériaux différents.

13. Bande de matériau (20) selon l'une des revendications 3 à 11,
**caractérisée en ce que**
les fils d'une couche de NCF (10, 11, 12) sont composés de différents matériaux.

14. Bande de matériau (20) selon la revendication 3,
**caractérisée en ce que**
les couches de NCF (10, 11, 12) sont jointes de telle manière que le non-tissé (9) peut absorber différentes forces de tractions dans différentes directions.
